## Europäisches Patentamt

## European Patent Office

## Office européen des brevets

(19)

(11) Veröffentlichungsnummer : **0 033 117**
**B1**

(12)  **EUROPÄISCHE PATENTSCHRIFT**

(45) Veröffentlichungstag der Patentschrift :
**13.06.84**

(21) Anmeldenummer : **81100371.4**

(22) Anmeldetag : **19.01.81**

(51) Int. Cl.³ : **A 01 N 63/00**

(54) **Wild-abweisendes Streumittel.**

(30) Priorität : **18.01.80 DE 3001777**

(43) Veröffentlichungstag der Anmeldung :
**05.08.81 Patentblatt 81/31**

(45) Bekanntmachung des Hinweises auf die Patenterteilung : **13.06.84 Patentblatt 84/24**

(84) Benannte Vertragsstaaten :
**AT CH DE FR LI**

(56) Entgegenhaltungen :
**DE-A- 1 955 178**

(73) Patentinhaber : **Huber, Günther**
**Leopoldstrasse 1a**
**D-7605 Bad Peterstal-Griesbach (DE)**

**Keller, Heinrich**
**Hauptstrasse 63**
**D-7603 Oppenau (DE)**

(72) Erfinder : **Huber, Günther**
**Leopoldstrasse 1a**
**D-7605 Bad Peterstal-Griesbach (DE)**
Erfinder : **Keller, Heinrich**
**Hauptstrasse 63**
**D-7603 Oppenau (DE)**

(74) Vertreter : **Hansmann, Axel et al**
**Albert-Rosshaupter-Strasse 65**
**D-8000 München 70 (DE)**

## Beschreibung

Die Erfindung betrifft ein Streumittel zum Schutz von Nutzpflanzungen entsprechend dem Oberbegriff des Anspruches.

Um Nutzpflanzungen, wie Schonungen im Wald, Baum- und Strauchpflanzungen in Baumschulen und Gärtnereibetrieben, Obstbaumkulturen, Strauchobstanlagen, Erdbeerpflanzungen und dergleichen, vor Wildschäden zu schützen, hat man seit jeher mit kostspieligen Einfriedungen, mit aufzusetzenden Metallspitzen oder mit Verteilung blinkender oder bei Wind klingender Metallbänder oder Bleche gearbeitet. Derartige schon durch ihre Anbringung höchst unbequemen und arbeitsmässig teueren Schutzvorrichtungen stellen aber gleichzeitig unerwünschte Hindernisse für die forst-, garten- oder obstbauliche Bearbeitung und Überwachung der Pflanzungen dar und sind in ihrer Wirkung ohnehin beschränkt und weitgehend der Gewöhnung des Wildes unterworfen.

Andere Abschreckmittel, die auf den Geruchssinn des Wildes wirken, verwenden Duftstoffverteilgeräte, die mittels eines Mechanismus in Zeitabständen die in einem Behälter abgeschlossene Duftquelle, zum Beispiel ein Menschengeruch ausströmendes Abschreckmittel, zeitweilig freigeben (zum Beispiel nach der DE-PS 11 25 225) haben sich schon wegen der dabei notwendigen teueren und schadanfälligen mechanischen Anlagen zum abwechselnden Freigeben und Abdecken des Abschreckmittels für die praktische Anwendung nicht bewährt.

Das gleiche gilt für den Vorschlag nach der DE-OS 19 55 217, verwilderte Tauben von den zu schützenden Bauwerken oder Kulturen durch Auslegen verluderter Hasenfelle oder durch Besprühen mit einem daraus durch Auskochen erzeugten Sud fernzuhalten. Eine abschreckende Wirkung für Wild wäre dadurch ohnehin nicht gegeben. Auch hier erfordert das Verteilen des Schutzmittels erhebliche Umstände und recht grossen Aufwand.

Weitere Schutzmassnahmen arbeiten daher mit einfachen Streumitteln, die wie zum Beispiel der krümelige « Schneckentod » um die Pflanzen herumgestreut werden. Ihre Wirkung ist aber entweder auf bestimmte tierische Schädlinge abgestimmt, daher unwirksam gegen andere Pflanzenfeinde, oder aber infolge von Giftstoffen in dem Streumittel auch gefährlich für gutartige Tiere, wie Insekten, zum Beispiel Bienen, die dann ebenso wie die abzuwehrenden Schädlinge durch das Pflanzenschutzmittel geschädigt oder vernichtet werden. Ein für die Umwelt völlig unschädliches rein biologisches, d. h. ungiftiges Streumittel guter Wild-abweisender Wirkung wird seit Jahren vergeblich gesucht.

Auch die durch gleichfalls arbeitskostenmässig aufwendigen Anstrich der Stämme verteilten Schutzmittel klebriger Beschaffenheit, wie leim- oder teerhaltige Mittel, sowie das Fegeschutzmittel « Bart » nach dem DE-GM 18 68 109 aus einem an die zu schützenden Pflanzen anzubindenden Klebeband, an welchem als abschreckender Witterungsträger Menschenhaare befestigt sind, stellen bei Klebrigkeit des Bandes eine Gefahr für Bienen dar ; ferner ist die Anbringung dieses Fegeschutzes sehr arbeitsaufwendig, vor allem versagt die Schutzwirkung mangels Anbringbarkeit völlig bei Niederpflanzungen, wie Erdbeeren oder gar Roßkartoffeln, deren Knollen unter der Erde liegen und bis zur Ernte im Frühjahr ein vielbegehrtes Ziel für das wühlende Wild darstellen.

Die DE-A-1.955.178 beschreibt Torf enthaltende Düngemittel welche durch Tierhaare angereichert sein können.

Aufgabe der Erfindung ist es, unter Verwendung von Menschenhaar oder Haar eines Wild-abschreckenden Tieres wie Hundehaar als abschreckender Witterungsträger ein ganz leicht anzuwendendes Wild-abweisendes Mittel zu schaffen, welches Nutzpflanzungen jeder Art, also Bäume ebenso wie Erdpflanzen, sicher gegen ihre tierischen Feinde schützt, jedoch durch Fehlen jeglicher giftiger oder sonstwie schädlicher oder auch nur unbequemer Bestandteile keinerlei nachteilige Wirkungen auf die Umwelt und auf harmlose oder nützliche Tiere, Insekten oder Pflanzen ausübt.

Gelöst wird diese Aufgabe gemäss der Erfindung durch die im kennzeichnenden Teil des Anspruches angegebenen Merkmale.

Bei dem in dieser Weise ausgebildeten Streumittel lässt sich die bekannte Abschreckwirkung des Witterungsträgers Haar auch ohne die bei den bisherigen Vorschlägen auftretenden Schwierigkeiten bei Anwendung und Verteilung voll ausnutzen, besonders auch bei solchen Nutzpflanzungen, bei denen die bisherigen Anwendungsarten versagt haben.

Das Substrat muss einen das Ausstreuen ermöglichenden Trockenheitszustand haben und muss je nach dem Feuchtigkeitsgrad des Ausgangsmaterials einer trocknenden Wärmebehandlung unterzogen werden.

Die Zusammensetzung des Streumittels hängt von der beabsichtigten Verwendung und von den Eigenschaften der Bestandteile ab. Das Verhältnis schwankt zwischen 20 bis 60 Gew.% Haar und 80 bis 20 Gew.% Substrat. Eine bewährte Mischung enthält zum Beispiel 30 Gew.% Haar in Längen von 1 bis 20 mm geschnitten, wie es zum Beispiel beim Friseur anfällt, sowie als Restbestandteil lockeren Torfmull, der das Streugut zusammenhält.

Es wurde beobachtet, dass die zu verscheuchenden Tiere, zum Beispiel Rehwild, an dem ausgestreuten Mischpulver schnuppern und sich dann von der geschützten Pflanzung zurückziehen und nicht wiederkehren. Es hat sich auch gezeigt, dass der Torfmull-Bestandteil des auf Pflanzen, zum Beispiel junge Fichtenschößlinge einer Schonung, aufgestreuten Pulvers auch über Wochen und Monate hinweg das Abfallen durch Wind und Wetter verhindert und so eine sichere Dauerwirkung gewährleistet.

**Anspruch**

Streumittel zum Schutz von Nutzpflanzungen vor Wildschäden unter Verwendung eines Wild-abschreckenden Witterungsträgers, dadurch gekennzeichnet, dass als Witterungsträger zerkleinertes Menschenhaar oder Haar eines Wild-abschreckenden Tieres, mit lockerem Substrat wie Torfmull oder Ton zu einer leicht verteilbaren Streumasse vermischt ist.

**Claim**

Spreading agent for the protection of useful plants from damage by game by the use of a deterrent scent-carrier, characterized in that, as a scent-carrier comminuted human hair or hair from a deterrent animal is mixed with a loose carrier, such as garden peat or clay, to form an easily distributable spreading material.

**Revendication**

Produit à répandre, de protection des plantes utiles contre les dommages du gibier en utilisant un épouvantail repoussant le gibier, caractérisé en ce qu'on mélange à titre d'épouvantail, des cheveux humains broyés ou des poils d'un animal repoussant le gibier, avec un substrat meuble comme de la fibre de tourbe ou de l'argile pour former une masse à répandre facilement dispersible.